# EUROPÄISCHE PATENTSCHRIFT

(11) **EP 1 201 349 B1**
(45) Veröffentlichungstag und Bekanntmachung des Hinweises auf die Patenterteilung: **26.01.2005**
(21) Anmeldenummer: 01124932.3
(22) Anmeldetag: 19.10.2001
(51) Int. Cl.: B23P 19/02

(54) **Vorrichtung zum Zu- und/oder Abführen von Radsätzen zu einer Radsatzpresse**
Device for feeding or carrying away wheel sets in a wheel set press
Dispositif pour alimenter ou retirer des jeux de roues pour véhicules ferroviaires à une presse de jeux de roues

(30) Priorität: 24.10.2000 DE 20018208 U
(43) Veröffentlichungstag der Anmeldung: 02.05.2002
(73) Patentinhaber: MAE MASCHINEN- U. APPARATEBAU GÖTZEN Gmbh & CO. KG, D-40699 Erkrath (DE)
(72) Erfinder: Mitze, Manfred, 58300 Wetter (DE)
(74) Vertreter: GROSSE BOCKHORNI SCHUMACHER

(56) Entgegenhaltungen:
- US-A- 2 934 819
- US-A- 3 073 017
- US-A- 3 304 600
- US-A- 3 399 447
- PATENT ABSTRACTS OF JAPAN vol. 1996, no. 09, 30. September 1996 (1996-09-30) -& JP 08 132806 A (SUMIKIN OSAKA PLANT KK), 28. Mai 1996 (1996-05-28)
- DATABASE WPI Section PQ, Week 199351 Derwent Publications Ltd., London, GB; Class P56, AN 1993-412431 XP002226524 -& SU 1 780 979 A (LENGD RAIL ENG INST), 15. Dezember 1992 (1992-12-15)

## Beschreibung

Die Erfindung bezieht sich auf eine Vorrichtung zum Zu- und/oder Abführen von Radsätzen für Schienenfahrzeuge zu einer Radsatzpresse, nach dem Oberbegriff des Anspruchs 1.

Das sichere Fügen von Radscheiben, Bremsscheiben oder dergleichen einerseits und einer Achse andererseits, die im montierten Zustand drehbar an einem Schienenfahrzeug gelagert ist, ist für den zuverlässigen Betrieb letzteres von herausragender Bedeutung. Weil die Räder in den meisten Fällen ausschließlich durch Reibschluß auf der Achse fixiert werden, muß zwischen Radbohrung und Achs-Außendurchmesser eine Preßpassung vorhanden sein. Der Montagevorgang neuer oder überarbeiteter Radscheiben, Bremsscheiben oder dergleichen auf der Achse sowie der Demontagevorgang derselben nach Erreichen der Verschleißgrenze von der Achse erfordert daher hohe Kräfte im Bereich von 800 bis 2500 kN.

Wenn im Folgenden von "Radsatz" die Rede ist, so ist hiermit die Achse mit sämtlichen aufzupressenden Bauteilen, wie Radscheiben, Bremsscheiben oder dergleichen, gemeint. Unter "Fügen" sei sowohl das Zusammenfügen der Bauteile, mit anderen Worten: das Aufpressen der Radscheiben, Bremsscheiben oder dergleichen auf die Achse, als auch das Abpressen dieser Bauteile von der Achse gemeint.

Hydraulische Pressen haben die Fähigkeit, große Kräfte über lange Hübe hinweg aufbringen zu können; sie sind daher für das Fügen von Radsätzen optimal geeignet. Schon gegen Ende des 19. Jahrhunderts wurden hydraulisch betriebene Radsatzpressen mit Erfolg eingesetzt. Die bislang bekannt gewordenen Radsatzpressen stimmen in ihrem prinzipiellen Aufbau und in ihrer Wirkungsweise untereinander mit denjenigen, die gegen Ende des 19. Jahrhunderts eingesetzt wurden, im wesentlichen überein. Beispielhaft sei auf eine Radsatzpresse der Firma Hoesch Maschinenfabrik Deutschland AG der Serie PR verwiesen. Sie ist als horizontal angeordnete, mit einem ölhydraulischen angetriebenen Hochdruckzylinder ausgestattete Zweisäulenpresse ausgeführt. Der Hochdruckzylinder ist in einem seitlichen Zylinderholm installiert, in dem des weiteren die beiden Säulen an einem Ende fixiert sind. Der Lagerung der anderen Enden der Säulen dient eine Endtraverse, die - wie auch der Zylinderholm - mit einem Flansch zur Befestigung der Radsatzpresse am Boden ausgestattet ist. Mit ihren oberen Enden tragen der Zylinderholm und die Endtraverse eine sich im wesentlichen parallel zu den Säulen erstreckende Brückenkrananordnung.

Beide Säulen, die in dem Zylinderholm und in der Endtraverse gelagert sind, weisen über ihre freie Länge zwischen dem Zylinderholm und der Endtraverse jeweils ein Spindelgewinde auf. Dieses dient der Verlagerung eines als Widerlager dienenden, C-förmigen Laufholms, welcher drehbare Muttern mit Innengewinde aufweist, die sich mit den Spindelgewinden der Säulen im Eingriff befinden. Der Laufholm verfügt über Nuten, in die die eigentlichen, nach vorn offenen Fügewerkzeuge eingeschoben werden können.

Zum Fügen eines Radsatzes werden bei dieser Radsatzpresse zunächst die Achse und das zu fügende Bauteil mit Hilfe des Brückenkrans in die Vormontageposition gebracht. In dieser ist das zu fügende Bauteil auf die Achse aufgeschoben und befindet sich in einer Position, von der aus es auf einen den Preßsitz bildenden Umfangsbund aufgepreßt werden kann. Die Achse wird dann - an dem Brückenkran hängend - manuell derart ausgerichtet, daß ihre Längsmittelachse und die Längsmittelachse des Preßzylinders zusammenfallen. Die Fixierung der Achse in dieser Position erfolgt einerseits mittels einer an der Stirnfläche des Druckstempels des Hochdruckzylinders vorgesehenen Zentrierspitze, die abgefedert ist und in eine Zentrierbohrung der Achse eingreift, andererseits mittels einer zweiten Zentrierspitze, die durch einen etwa an der Endtraverse befestigten Hydraulikzylinder bewegt werden kann. Vor dem Einspannen der Achse wird der Laufholm so verfahren, daß sich das darin eingeschobene Werkzeug in Preßrichtung gesehen hinter dem zu fügenden Bauteil befindet. eingeschobene Werkzeug in Preßrichtung gesehen hinter dem zu fügenden Bauteil befindet.

Der eigentliche Preßvorgang erfolgt dann, indem durch Betätigung des Hochdruckzylinders die Achse in Preßrichtung soweit verlagert wird, bis sich das sich an dem Werkzeug abstützende Bauteil auf der Achse in der gewünschten Position befindet.

Zum Fügen eines weiteren Bauteils wird dann mittels des Brückenkranes die Achse der Radpresse entnommen, im Falle des Aufpressens wird das nächste Bauteil in seine Vormontageposition gebracht, im Falle des Abpressens das gelockerte Bauteil entnommen. Anschließend wird das Werkzeug durch Rotation der mit Gewinde ausgestatteten Muttern in seine für den nächsten Preßvorgang erforderliche Position verlagert. Die Achse mit den Bauteilen wird dann - wiederum mit Hilfe des Brückenkranes - vom Bedienpersonal in die bereits oben beschriebene Preßposition gebracht und der Fügevorgang erneut durchgeführt.

Nachteilig ist, daß der Radsatz mehrfach mit Hilfe des Brückenkrans in die Radsatzpresse eingebracht und wieder entnommen werden muß, bis sämtliche Fügevorgänge abgeschlossen sind, da sich durch das hierzu benötigte Personal die Kosten für das Fügen von Radsätzen drastisch erhöhen. Darüber hinaus besteht für das Bedienpersonal aufgrund der manuellen Bestückung der Radsatzpresse mit teils tonnenschweren Bauteilen eine nicht zu unterschätzende Verletzungsgefahr.

Dem Oberbegriff des Anspruchs 1 liegt die Vorrichtung nach der US-A-2934819 zugrunde, die im Übergabebereich der Radsatzpresse schon einen höheren Mechanisierungsgrad aufweist, insofern eine Radachse mit zwei lose aufgesetzten Rädern auf ein auf Schienen laufenden Flurförderzeug aufgesetzt und horizontal senkrecht zur Pressrichtung in die Radsatzpresse hineingefahren wird. Im Bereich der Radsatzpresse braucht hier also nicht mehr mit einem Kran gearbeitet zu werden. Allerdings sind hierbei gewisse Beschränkungen der Ausgestaltung der Radsatzpressen und des Arbeitsflusses gegeben, insofern einerseits die Radsatzpresse ein Hindurchführen des Radsatzes in der Anlieferrichtung erlauben muss und andererseits die Entnahme des Radsatzes nur jenseits der Radsatzpresse erfolgen kann.

Der Erfindung liegt daher die Aufgabe zugrunde, eine gattungsgemäße Vorrichtung zu schaffen, die die genannten Beschränkungen nicht aufweist.

Diese Aufgabe wird durch die in Anspruch 1 wiedergegebene Vorrichtung gelöst.

Dadurch, daß die Vorrichtung eine Einrichtung zur Aufnahme eines vormontierten oder verpreßten Radsatzes umfaßt, die quer zur Preßrichtung verlagerbar angeordnet ist, kann der komplette Radsatz zwischen zwei Preßvorgängen der Radsatzpresse entnommen werden und der Laufholm mit dem Werkzeug in seine für den nächsten Fügevorgang erforderliche Position gebracht werden, ohne daß es eines manuellen Eingriffs durch das Bedienpersonal bedarf. Anschließend kann mit der erfindungsgemäßen Vorrichtung der Radsatz zur Durchführung des nächsten Fürgevorganges erneut in die Preßstellung der Radsatzpresse gebracht werden. Dieses ohne ein manuelles Eingreifen mögliche Zu- und Abführen des Radsatzes in die Radsatzpresse samt Verlagerung des Fügewerkzeuges in die benötigte Position wird sooft durchgeführt, bis sämtliche Fügevorgänge abgeschlossen sind. Es versteht sich, daß mit der erfindungsgemäßen Vorrichtung im Falle des Aufpressens vollständig vormontierte Radsätze verwendet werden können, sich im Falle des Abpressens eine Einzelentnahme des bei einem Fügevorgang abgepreßten Bauteils erübrigt. Da es - wie oben ausgeführt - keiner manuellen Eingriffe während des Fügens eines gesamten Radsatzes bedarf, kann des weiteren mit Hilfe der erfindungsgemäßen Vorrichtung das Fügeverfahren automatisiert werden.

Bei dem Flurförderzeug handelt es sich vorzugsweise um ein Schienenfahrzeug (Anspruch 2). Es ist jedoch auch der Einsatz beispielsweise eines selbstlenkenden, fern- oder selbstgesteuerten Bodenfahrzeugs denkbar.

Bei einer bevorzugten Ausführungsform der erfindungsgemäßen Vorrichtung (Anspruch 3) weist die Einrichtung zur Aufnahme des Radsatzes mindestens zwei etwa parallel zueinander verlaufende Ausleger auf, die jeweils mindestens eine Aufnahme umfassen, in die die Achse abrollsicher von oben einsetzbar ist. Eine solche Aufnahme kann beispielsweise eine nach unten spitz zulaufende, prismenartige Ausnehmung sein.

Die Ausleger der Einrichtung sind vorzugsweise (Anspruch 4) etwa in vertikaler Richtung nach Art eines Gabelstaplers verlagerbar angeordnet. Die zu fügenden Radsätze können dann - im Rahmen des Verlagerungsweges - aus nahezu beliebigen Höhen am Bereitstellungsort in die erforderliche Preßhöhe gehoben bzw. abgesenkt werden.

Dadurch, dass die Einrichtung zur Aufnahme des Radsatzes an einem um eine etwa vertikale Achse verschwenkbar auf dem Flurförderzeug angeordneten Oberteil angebracht ist, ist die erfindungsgemäße Vorrichtung besonders flexibel in der Verwendung. Es muss nicht mehr eine bestimmte Arbeitsrichtung beibehalten, sondern der Radsatz kann aus verschiedenen Richtungen aufgenommen und in verschiedene Richtungen wieder abgegolten werden. Im Falle der Bereitstellung vormontierter Radsätze kann der Bereitstellungsort eine hier nicht weiter beschriebene Vormontageeinrichtung sein, in welcher die aufzupressenden Bauteile auf die Achse aufgeschoben werden.

Der Schwenkwinkel des Oberteils beträgt vorzugsweise 360° (Anspruch 5).

Konstruktiv wird die Verschwenkbarkeit des Oberteils auf dem Flurförderzeug vorzugsweise dadurch realisiert, daß das Oberteil mittels eines Drehkranzes auf dem Flurförderzeug angebracht ist (Anspruch 6).

Der Steuerung der Bewegungsabläufe der gesamten Vorrichtung dient vorzugsweise ein Computer (Anspruch 7). Wenn dieser des weiteren Die Steuerung der Radsatzpresse übernimmt (Anspruch 8), kann durch geeignete Koordination der Steuerungen der Fügevorgang vollständig automatisiert werden.

In der Zeichnung ist ein Ausführungsbeispiel der erfindungsgemäßen Vorrichtung dargestellt. Es zeigen:
Fig. 1 eine Ausführungsform einer erfindungsgemäßen Vorrichtung in einer Seitenansicht während der Aufnahme eines bereitgestellte Radsatzes (durchgezogen dargestellt) und während der Übergabe des Radsatzes an eine Radsatzpresse (strichpunktiert dargestellt), sowie
Fig. 2 dieselbe Vorrichtung während der Aufnahme eines bereitgestellten Radsatzes (durchgezogen dargestellt) sowie bei Übergabe an eine Radsatzpresse (gestrichelt dargestellt) in einer Ansicht von oben.

Die in der Zeichnung als Ganzes mit 100 bezeichnete Vorrichtung zum Zu- und/oder Abführen von Radsätzen zu einer Radsatzpresse, bei der es sich um eine konventionelle oder um eine solche handeln kann, die Gegenstand einer weiteren Schutzrechtsanmeldung vom selben Tage ist und hier nicht weiter beschrieben werden soll, umfasst ein Flurförderzeug 1. Es ist als Schienenfahrzeug ausgebildet und entlang des aus Schienen 2, 3 bestehenden Schienenpaares 4 über Laufräder 5 verfahrbar. Dem Antrieb des Flurförderzeugs 1 dient ein mit einem der Laufräder gekoppelter Rotationsmotor 6, der beispielsweise als Elektro/Verbrennungs/Hydro- oder Pneumatikmotor ausgebildet sein kann. Es ist jedoch ebenfalls möglich, zur Verlagerung des Flurförderzeugs einen in Richtung des Schienenpaares 4 wirkenden Linearantrieb oder Linearmotor vorzusehen. Das Flurförderzeug umfaßt des weiteren ein die Laufräder 5 lagerndes Chassis 7, auf welchem über einen Drehkranz 8 um eine vertikale Drehachse DS ein Oberteil 9 um 360° drehbar angeordnet ist.

Dem Drehantrieb um die Drehachse DS dient ein an dem Oberteil befestigter Rotationsmotor 10, welcher mit dem drehfest an dem Flurförderzeug 1 befestigten Drehkranz 8 zusammenwirkt. Bei diesem Rotationsmotor handelt es sich um einen Elektromotor, es ist jedoch wiederum die Verwendung auch anderer Rotationsmotoren denkbar.

An einer vertikalen Schmalseite des quaderförmigen Oberteils 9 ist eine vertikal verlaufende Schienenanordnung 11 vorgesehen, entlang welcher zwei Ausleger 12,13 in vertikaler Richtung verlagerbar angeordnet sind. Der Verlagerung der Ausleger 12,13 - mit anderen Worten: der Bewirkung einer Hub- bzw. Senkbewegung - dient bei dem in der Zeichnung dargestellten Ausführungsbeispiel ein Spindelantrieb 14, der durch einen Elektro-Rotationsmotor 15 angetrieben wird. Es versteht sich, daß auch andere Antriebe zur Bewirkung der Hub- bzw. Senkbewegung der Ausleger 12,13, beispielsweise mittels hydraulisch betätigbarer Kolben/Zylindereinheiten, denkbar sind.

Die Ausleger sind an ihrer horizontal verlaufenden Oberseite mit Prismenaufnahmen 16,17 versehen, in die die Achse RA des zu verpressenden Radsatzes RS abrollsicher von oben einsetzbar ist.

Im Folgenden soll nun die Funktionsweise der Vorrichtung erläutert werden.

Um der Radsatzpresse R einen zu fügenden Radsatz RS zuzuführen, wird die Vorrichtung 100 zunächst entlang des Schienenpaares 4 in eine zur Radsatzpresse R entfernte Position verfahren, um hier einen vormontierten Radsatz (im Falle des Aufpressens) bzw. einen verpreßten Radsatz (infolge des Abpressens) durch Untergreifen der Radsatzachse RA mittels der Prismenaufnahmen 16,17 aufzunehmen. Liegt der Radsatz auf dem Boden, so erfolgt dies - wie in der Zeichnung durchgezogen dargestellt - dadurch, daß die Ausleger 12,13 zunächst abgesenkt und die Prismenaufnahmen 16,17 unter die Radachse gefahren werden.

Anschließend werden die Ausleger 12,13 mittels des Spindelantriebs 14 und mit diesen der gesamte Radsatz RS angehoben. Danach wird das Oberteil mit Hilfe des Rotationsmotors 10 um 180° um die Drehachse DS verschwenkt, so daß sich der zu fügende Radsatz RS nun auf der der Radsatzpresse R zugewandten Seite der Vorrichtung 100 befindet.

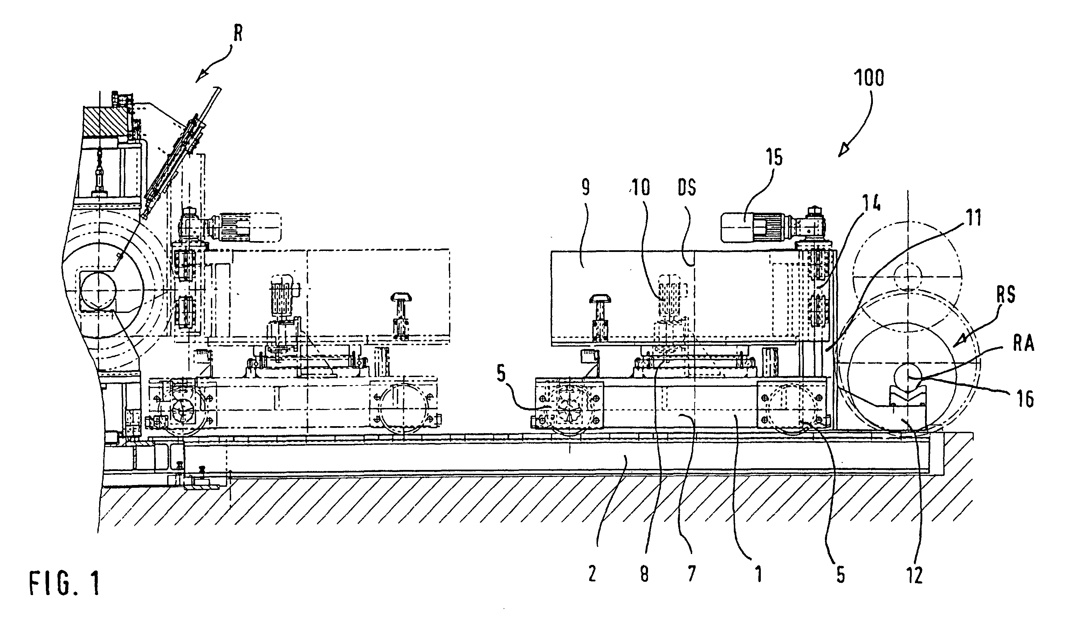

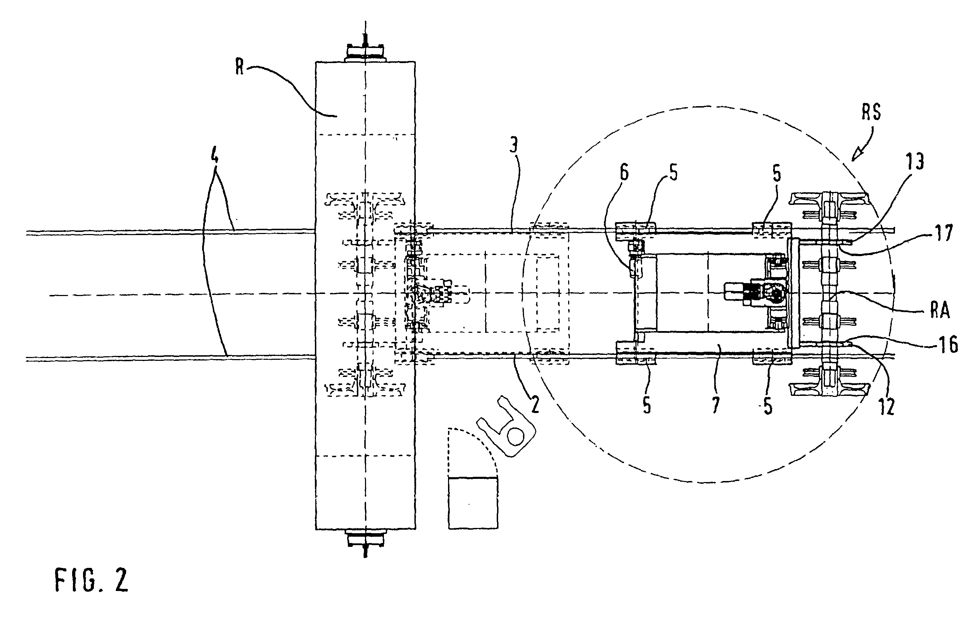

Nachdem die Radsatzachse RA in die durch die Radsatzpresse R vorgegebene Preßhöhe gebracht worden ist, was vor, während oder nach der Drehung des Oberteils 9 geschehen kann, wird die Vorrichtung 100 mittels des Rotationsmotors 6 zur Radsatzpresse R verfahren, bis die Radsatzachse sich in ihrer Preßposition befindet. Diese Stellung der Vorrichtung 100 ist in Fig. 1 strichpunktiert, in Fig. 2 gestrichelt dargestellt.

Der Preßvorgang in der Radsatzpresse erfolgt nun in bekannter Weise, wobei - je nach durch die Radsatzpresse vorgegebene Raumverhältnisse - der Radsatz RS hierbei auf den Auslegern ruhend verbleiben kann oder aber die Vorrichtung 100 nach Absenken der Ausleger 12,13 zur Freigabe der Radachse RA aus den Prismenaufnahmen 15,16 zurückverlagert werden kann.

Nach Beendigung des Fügevorganges des jeweiligen Bauteils des Radsatzes RS wird letzterer durch entsprechendes Verlagern der Vorrichtung 100 und gegebenenfalls der Ausleger 12,13 der Radsatzpresse R entnommen, deren Fügewerkzeuge in die zum Fügen des nächsten Bauteils notwendige Position verlagert und der Radsatz RA mit Hilfe der Vorrichtung 100 erneut in der beschriebenen Weise in die Preßposition gebracht.

Die oben beschriebenen Vorgänge werden sooft wiederholt, bis sämtliche Fügevorgänge erfolgt sind. Anschließend kann der Radsatz - beispielsweise nach einer Drehung des Oberteils 9 um die Drehachse DS lediglich um 90° - einer Einrichtung zur Weiterbearbeitung bzw. einer Transportvorrichtung übergeben werden.

Es versteht sich, daß mittels der Vorrichtung 100 nicht nur ein vormontierter Radsatz RS zum Aufpressen der Radsatzpresse R zugeführt werden kann, sondern auch ein montierter Radsatz zum Abpressen der auf der Radachse befindlichen Bauteile. An der Funktionsweise der erfindungsgemäßen Vorrichtung ändert dies nichts.

### BEZUGSZEICHEN-LISTE

- 1: Flurförderzeug
- 2: Schiene
- 3: Schiene
- 4: Schienenpaar
- 5: Laufräder
- 6: Rotationsmotor
- 7: Chassis
- 8: Drehkranz
- 9: Oberteil
- 10: Rotationsmotor
- 11: Schienenanordnung
- 12: Ausleger
- 13: Ausleger
- 14: Spindelantrieb
- 15: Rotationsmotor
- 16: Prismenaufnahmen
- 17: Prismenaufnahmen
- 100: Vorrichtung
- R: Radsatzpresse
- DS: Drehachse
- RA: Radsatzachse
- RS: Radsatz

## Patentansprüche

1. Vorrichtung (100) zum Zu- und/oder Abführen von Radsätzen (RS) für Schienenfahrzeuge zu einer Radsatzpresse (R), in der Bauteile wie Radscheiben, Bremsscheiben oder dergleichen auf eine Achse aufgepreßt oder von der Achse abgepreßt werden,
und mit einem Flurförderzeug mit einer an dem Flurförderzeug (1) quer zur Preßrichtung verlagerbaren Einrichtung zur Aufnahme eines vormontierten oder verpreßten Radsatzes (RS)
**dadurch gekennzeichnet, daß**
die Einrichtung zur Aufnahme des Radsatzes (RS) an einem um eine etwa vertikale Drehachse (DS) verschwenkbar auf dem Flurförderzeug (1) angeordnetem Oberteil (9) angebracht ist.

2. Vorrichtung nach Anspruch 1, **dadurch gekennzeichnet, daß** das Flurförderzeug (1) ein Schienenfahrzeug ist.

3. Vorrichtung nach Anspruch 1 oder 2, **dadurch gekennzeichnet, daß** die Einrichtung zur Aufnahme des Radsatzes mindestens zwei etwa parallel zueinander verlaufende Ausleger (12,13) umfaßt, die jeweils mindestens eine Aufnahme (16,17) aufweisen, in die die Achse (RA) abrollsicher von oben einsetzbar ist.

4. Vorrichtung nach Anspruch 3, **dadurch gekennzeichnet, daß** die Ausleger (12,13) in vertikaler Richtung nach Art eines Gabelstaplers verlagerbar angeordnet sind.

5. Vorrichtung nach einem der Ansprüche 1 bis 4, **dadurch gekennzeichnet, daß** das Oberteil (9) um 360° verschwenkbar angebracht ist.

6. Vorrichtung nach einem der Ansprüche 1 bis 5, **dadurch gekennzeichnet, daß** das Oberteil mittels eines Drehkranzes (8) auf dem Flurförderzeug (1) angebracht ist.

7. Vorrichtung nach einem der Ansprüche 1 bis 6, **dadurch gekennzeichnet, daß** zur Steuerung der Bewegungsabläufe der Vorrichtung, insbesondere der Einrichtung zur Aufnahme eines vormontierten oder verpreßten Radsatzes und des Flurförderzeugs ein Computer vorgesehen ist.

8. Vorrichtung nach Anspruch 7, **dadurch gekennzeichnet, daß** der Computer des weiteren der Steuerung der Radsatzpresse dient.

## Claims

1. Device (100) for advancing or withdrawing wheelsets (RS) for rail vehicles to a wheelset press (R) in which components such as wheel discs, brake discs or similar are pressed onto an axle or withdrawn from the axle,
and with an industrial truck with a device on the truck (1) which can be moved transverse to the pressing direction to accommodate a pre-assembled or pressed wheelset (RS),
**characterised in that**
the device to accommodate the wheelset (RS) is attached to an upper part (9) arranged on the truck (1) and swivellable approximately about a vertical rotation axis (DS).

2. Device according to claim 1, **characterised in that** the truck (1) is a rail vehicle.

3. Device according to claim 1 or 2, **characterised in that** the device to accommodate the wheelset comprises at least two extension arms (12, 13) running approximately parallel to each other, each of which has at least one holder (16, 17) into which the axle (RA) can be inserted from above, secure against rolling away.

4. Device according to claim 3, **characterised in that** the extension arms (12, 13) are arranged to be displaceable in the vertical direction in the manner of a forklift truck.

5. Device according to any one of claims 1 to 4, **characterised in that** the upper part (9) is attached swivellable through 360°.

6. Device according to any one of claims 1 to 5, **characterised in that** the upper part is attached to the truck (1) by means of a slewing rim (8).

7. Device according to any one of claims 1 to 6, **characterised in that** a computer is provided to control the movement procedures of the device, in particular of the device to accommodate a pre-assembled or pressed wheelset, and of the truck.

8. Device according to claim 7, **characterised in that** the computer also serves to control the wheelset press.

## Revendications

1. Dispositif (100) pour amener à une presse de jeu de roues (R), ou à les en retirer, des jeux de roues (RS) pour véhicules ferroviaires, presse dans laquelle les composants tels que des roues, des disques de frein ou similaires, sont montés sur un essieu ou retirés de celui-ci, par pressage, avec un convoyeur au sol (1) équipé d'une installation de réception mobile transversalement à la disposition de pressage, pour accueillir un jeu de roues prémonté ou prépressé (RS),
**caractérisé en ce que**
l'installation de réception du jeu de roues (RS) est monté sur une partie supérieure (9) portée par le convoyeur au sol (1) et pouvant pivoter autour d'un axe vertical (DS).

2. Dispositif selon la revendication 1,
**caractérisé en ce que**
le convoyeur au sol (1) est un véhicule sur rails.

3. Dispositif selon la revendication 1 ou 2,
**caractérisé en ce que**
l'installation de réception du jeu de roues comprend au moins deux bras (12, 13) à peu près parallèles entre eux et qui présentent chacun un logement (16, 17) dans lequel l'essieu (RA) peut être introduit, d'en haut, sans qu'il puisse rouler.

4. Dispositif selon la revendication 3,
**caractérisé en ce que**
les bras (12, 13) sont montés de manière à pouvoir coulisser en direction verticale à la manière d'une fourche d'un chariot élévateur.

5. Dispositif selon une des revendications 1 à 4,
**caractérisé en ce que**
la partie supérieure (9) peut pivoter de 360°.

6. Dispositif selon une des revendications 1 à 5,
**caractérisé en ce que**
la partie supérieure est montée sur le convoyeur au sol par l'intermédiaire d'une couronne de rotation (18).

7. Dispositif selon une des revendications 1 à 6,
**caractérisé en ce qu'**
un ordinateur est prévu pour commander les mouvements du dispositif, en particulier l'installation de réception d'un jeu de roues prémonté ou prépressé et du convoyeur au sol.

8. Dispositif selon la revendication 7,
**caractérisé en ce que**
l'ordinateur sert de plus à commander la presse.
